# EUROPÄISCHE PATENTSCHRIFT

(11) **EP 4 208 937 B1**
(45) Veröffentlichungstag und Bekanntmachung des Hinweises auf die Patenterteilung: **22.10.2025**
(21) Anmeldenummer: 21752021.2
(22) Anmeldetag: 28.07.2021
(51) Int. Cl.: H02K 1/2753

(54) **ELEKTROMOTOR MIT ROTOR**
ELECTRIC MOTOR WITH ROTOR
MOTEUR ÉLECTRIQUE À ROTOR

(30) Priorität: 04.09.2020 DE 102020005422
(43) Veröffentlichungstag der Anmeldung: 12.07.2023
(73) Patentinhaber: SEW-EURODRIVE GmbH & Co. KG, 76646 Bruchsal (DE)
(72) Erfinder: ÖZCAN, Abdulvahap, 68753 Waghäusel (DE); RAU, Tobias, 76137 Karlsruhe (DE)
(86) Internationale Anmeldenummer: PCT/EP2021/071205
(87) Internationale Veröffentlichungsnummer: WO 2022/048831

(56) Entgegenhaltungen:
- EP-A1- 0 134 670
- WO-A1-2015/129549
- GB-A- 2 388 479
- US-A1- 2008 284 268
- US-A1- 2014 239 764
- US-A1- 2019 260 245
- US-B2- 10 673 290

## Beschreibung

Die Erfindung betrifft einen Elektromotor mit Rotor.

Es ist allgemein bekannt, dass ein Rotor ein Aktivteil aufweist, wobei das Aktivteil einen Kurzschlusskäfig oder Dauermagnete aufweist.

**Aus der** GB 2 388 479 A **ist als nächstliegender Stand der Technik eine Rotoranordnung mit Permanentmagneten bekannt.**

**Aus der** US 10 673 290 B2 **ist ein bürstenloser Gleichstrommotor bekannt.**

**Aus der** US 2008 / 284268 A1 **ist eine elektrische Eintauchpumpe bekannt.**

**Aus der** WO 2015 / 129549 A1 **ist ein Rotor mit einem polar anisotropen Ringmagnet bekannt.**

**Aus der** US 2014 1239764 A1 **ist ein laminierter Rotor bekannt.**

**Aus der** US 2019/260245 A1 **ist ein Rotor einer elektrischen Maschine bekannt.**

**Aus der** EP 0 134 670 A1 **ist ein Elektromotor mit Dauernmagneten bekannt.**

Der Erfindung liegt daher die Aufgabe zugrunde, einen Elektromotor mit Rotor weiterzubilden, wobei eine verbesserte Effizienz des Motors bewirkbar sein soll.

Erfindungsgemäß wird die Aufgabe bei dem Elektromotor nach den in Anspruch 1 angegebenen Merkmalen gelöst.

Wichtige Merkmale der Erfindung bei dem Elektromotor mit Rotor sind, dass der Rotor eine im und/oder zum Gehäuse des Elektromotors drehbar gelagerte Rotorwelle aufweist,
wobei eine Hülse auf die Rotorwelle aufgesteckt ist,
wobei Dauermagnete mit der Hülse verbunden sind und auf die Hülse aufgeklebt sind,
wobei die Hülse radial zwischen den Dauermagneten und der Rotorwelle angeordnet ist.

Von Vorteil ist dabei, dass die Rückführung des Magnetfelds radial innerhalb der Dauermagnete mittels der Hülse ausführbar ist. Denn die Rotorwelle ist aus einem weniger magnetisch leitfähigen Material ausgeführt und somit werden die Magnetfeldlinien von der Hülse gebündelt geführt.

Ein weiterer Vorteil ist, dass die mit Dauermagneten bestückte und verbundene Hülse auf verschieden geformte Rotorwellen aufsetzbar ist, so dass verschiedene Varianten von Elektromotoren ausbildbar sind, bei denen jedoch die Feldführung identisch ist. Denn die magnetisch wenig leitfähige und mit großem Luftabstand zu den Dauermagneten beabstandete Rotorwelle verändert die Feldführung auch bei unterschiedlicher geometrischer Ausformung der Rotorwelle nicht.

Somit sind unterschiedliche Motoren mit identischem Drehmoment ausstattbar.

Die Hülse weist einen nach radial außen hervorragenden, in Umfangsrichtung vollständig umlaufenden Kragenbereich auf, insbesondere zur axialen Begrenzung der Dauermagnete. Von Vorteil ist dabei, dass eine einfache axiale Begrenzung für die Dauermagnete bereitstellbar ist.

Bei einer vorteilhaften Ausgestaltung sind die Dauermagnete gegen den Kragenbereich angestellt. Von Vorteil ist dabei, dass eine einfache axiale Begrenzung und eine präzise axiale Positionierung einfach und kostengünstig bewirkbar ist. Außerdem ist die Rückführung des Magnetfeldes besonders effizient, weil der Kragenbereich Dauermagnete direkt berührt.

Bei einer vorteilhaften Ausgestaltung weist die Hülse an ihrer radial äußeren Oberfläche einen geschliffenen Bereich auf, an dem die Dauermagnete mit der Hülse verbunden sind. Von Vorteil ist dabei, dass eine präzise Ausrichtung der Dauermagnete ausführbar ist.

Bei einer vorteilhaften Ausgestaltung weist die Hülse an ihrer radial inneren Oberfläche einen durch Zerspanung bearbeiteten Bereich, insbesondere drehend bearbeiteten Bereich, zur Verbindung mit der Rotorwelle auf. Von Vorteil ist dabei, dass mittels der durch das Zerspanen, insbesondere Drehen, erreichten erhöhten Rauigkeit eine verbesserte Verbindung der Dauermagnete erreichbar ist.

Zwischen Hülse und Rotorwelle ist ein Spaltbereich ausgeformt als radial Vertiefung der Rotorwelle oder als nach radial außen gerichtete Vertiefung an der Innenseite der Hülse. Von Vorteil ist dabei, dass der Spaltbereich mit Klebstoff befüllbar ist und somit eine hochbelastbare stoffschlüssige Verbindung der Hülse und der Rotorwelle erreichbar ist.

Bei einer vorteilhaften Ausgestaltung weist die Rotorwelle, insbesondere das Material der Rotorwelle, eine geringere, insbesondere eine mindestens zehnmal geringere, Permeabilität auf als die Hülse, insbesondere als das Material der Hülse. Von Vorteil ist dabei, dass die radial innen stattfindende Rückführung des Feldes der Dauermagnete nur unwesentlich durch die Rotorwelle ausgeführt wird und somit dieser Teil der Rückführung durch die Hülse bestimmt ist. Somit sind verschiedene Rotorwellen mit der Hülse verbindbar, ohne dass die magnetische Feldführung sich verändert.

Bei einer vorteilhaften Ausgestaltung weist die Rotorwelle, insbesondere das Material der Rotorwelle, eine geringere, insbesondere eine mindestens zehnmal geringere, Sättigungsflussdichte auf als die Hülse, insbesondere als das Material der Hülse. Von Vorteil ist dabei, dass die radial innen stattfindende Rückführung des Feldes der Dauermagnete nur unwesentlich durch die Rotorwelle ausgeführt wird und somit dieser Teil der Rückführung durch die Hülse bestimmt ist. Somit sind verschiedene Rotorwellen mit der Hülse verbindbar, ohne dass die magnetische Feldführung sich verändert.

Bei einer vorteilhaften Ausgestaltung weist die Rotorwelle, insbesondere das Material der Rotorwelle, eine geringere, insbesondere eine mindestens zehnmal geringere, Suszeptibilität auf als die Hülse, insbesondere als das Material der Hülse. Von Vorteil ist dabei, dass die radial innen stattfindende Rückführung des Feldes der Dauermagnete nur unwesentlich durch die Rotorwelle ausgeführt wird und somit dieser Teil der Rückführung durch die Hülse bestimmt ist. Somit sind verschiedene Rotorwellen mit der Hülse verbindbar, ohne dass die magnetische Feldführung sich verändert.

Bei einer vorteilhaften Ausgestaltung ist die Luftstrecke zwischen einem Dauermagneten und der Hülse kürzer, insbesondere mindestens zehnmal kürzer, als die Luftstrecke zwischen dem Dauermagneten und der Rotorwelle. Von Vorteil ist dabei, dass die radial innen stattfindende Rückführung des Feldes der Dauermagnete nur unwesentlich durch die Rotorwelle ausgeführt wird und somit dieser Teil der Rückführung durch die Hülse bestimmt ist. Somit sind verschiedene Rotorwellen mit der Hülse verbindbar, ohne dass die magnetische Feldführung sich verändert.

Bei einer vorteilhaften Ausgestaltung ist die Hülse mit der Rotorwelle formschlüssig verbunden,
wobei die Hülse an ihrer radialen Innenseite innenpolygonal ausgeformt ist,
wobei die Rotorwelle an ihrer radialen Außenseite außenpolygonal ausgeformt ist. Von Vorteil ist dabei, dass eine sichere formschlüssige Verbindung ausgeführt ist, die zusätzlich noch mit Klebstoff beaufschlagbar und somit zusätzlich stoffschlüssig ausgeführt wird.

Bei einer vorteilhaften Ausgestaltung ist als polygonale Form ein Hypotrochoidenförmiges Polygon verwendet. Von Vorteil ist dabei, dass eine besonders einfache und kostengünstige Herstellung durch ein rotierendes Werkzeug ausführbar ist, das auf einer Kreisbahn bewegt wird.

Bei einer vorteilhaften Ausgestaltung ist die Rotorwelle aus einem korrosionsbeständigen Stahl und/oder hochlegierten Stahl oder alternativ aus einem Einsatzstahl gefertigt, insbesondere einstückig, insbesondere einteilig. Von Vorteil ist dabei, dass zwar ein ferromagnetischer Werkstoff verwendet ist, aber dieser nur wenig magnetisch, insbesondere magnetisierbar, ist. Somit ist die Feldführung durch die Hülse bestimmt. Ein hochlegierter Stahl ermöglicht eine korrosionsbeständige Ausführung und somit eine hohe Standzeit. Alternativ ist aber auch ein kostengünstiger Einsatzstahl verwendbar.

Bei einer vorteilhaften Ausgestaltung ist die Hülse aus einem Vergütungsstahl gefertigt, insbesondere einstückig, insbesondere einteilig. Von Vorteil ist dabei, dass die Feldführung durch die Hülse bestimmt ist.

Zwischen der Hülse und dem Dauermagneten ist ein in Umfangsrichtung vollständig umlaufender Ringspalt ausgebildet, der mit Klebstoff befüllt ist, insbesondere wobei der vom Ringspalt überdeckte Radialabstandsbereich den vom Spaltbereich überdeckten Radialabstandsbereich umfasst. Von Vorteil ist dabei, dass die Schwingneigung des an den Kragenbereich angrenzenden Dauermagneten unterdrückt ist und zusätzlich eine stoffschlüssige Verbindung verstärkend vorsehbar ist.

Bei einer vorteilhaften Ausgestaltung weist die Hülse zumindest eine radial gerichtete Gewindebohrung auf, in welche Schraubteil, insbesondere Madenschraube, eingeschraubt ist,
wobei das Schraubteil auf die Rotorwelle drückt, insbesondere in einer an der Oberfläche der Rotorwelle ausgeführten Vertiefung,
insbesondere wobei das Schraubteil in den Spaltbereich ragt, insbesondere derart, dass Klebstoff die Rotorwelle, die Hülse und das Schraubteil mit Klebstoff stoffschlüssig verbunden sind. Von Vorteil ist dabei, dass auch bei Versagen des Klebstoffs die Hülse mit der Rotorwelle mittels des Schraubteils verbunden ist, wobei das Schraubteil die Hülse zumindest kraftschlüssig an der Rotorwelle sichert. Wenn das Schraubteil in eine Vertiefung der Rotorwelle drückt, ist sogar eine formschlüssige Sicherung der Hülse an der Rotorwelle zusätzlich erreichbar.

Weitere Vorteile ergeben sich aus den Unteransprüchen.

Die Erfindung wird nun anhand von schematischen Abbildungen näher erläutert:

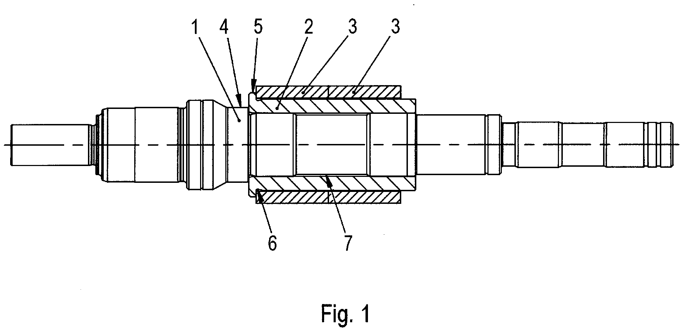

In der Figur 1 ist ein Rotor eines erfindungsgemäßen Elektromotors schematisch dargestellt.

Wie in der Figur 1 dargestellt, ist eine Hülse 2 auf eine Rotorwelle 1 des Elektromotors aufgeschoben.

Am radialen Außenumfang der Hülse 2 sind Dauermagnete 3 aufgeklebt.

Die Hülse 2 weist einen nach radial außen hervorragenden Kragenbereich 5 auf, welcher als axiale Begrenzung für die Dauermagnete 3 fungiert.

Die Hülse 2 selbst wiederum wird durch einen Wellenbund 4 der Rotorwelle 1 axial begrenzt.

Somit ist die Hülse gegen eine am Wellenbund 4 ausgebildete Stufe angestellt.

Der von der Hülse 2 überdeckte axiale Bereich umfasst den von den Dauermagneten 3 überdeckten axialen Bereich. Somit ragt die Hülse 2 axial hervor, so dass das von den Dauermagneten 3 erzeugte Magnetfeld durch die Hülse 2 axial durchgeleitet wird. Die axial hervorragende Hülse 2 fungiert somit auch als magnetische Abschirmung zur Rotorwelle 1 hin. Denn der Luftabstand zwischen den Dauermagneten 3 und der Rotorwelle 1 ist mindestens zehnmal größer als der Luftabstand zwischen den Dauermagneten 3 und der Hülse 2, da die Dauermagnete 3 vorzugsweise direkt auf der Hülse 2 angeordnet ist.

Die Rotorwelle 1 hat vorzugsweise eine geringere, insbesondere eine mindestens zehnmal geringere, Suszeptibilität als die Hülse 2. Somit wird das Magnetfeld der Dauermagnete 3 im Wesentlichen durch die Hülse 2 zurückgeleitet und nicht durch die Rotorwelle 1.

Die Hülse 2 ist aus einem Stahl, insbesondere Vergütungsstahl, gefertigt. Dieser Stahl ist ferromagnetisch ausgeführt und somit mit einer hohen magnetischen Permeabilität ausführbar. Im Gegensatz dazu ist die Rotorwelle 1 aus einem einfachen Einsatzstahl ausführbar, der nur eine geringe magnetische Permeabilität aufweist, die viel kleiner ist als die magnetische Permeabilität der Hülse 2.

Die Rotorwelle 1 hat vorzugsweise eine geringere, insbesondere eine mindestens zehnmal geringere, Permeabilität als die Hülse 2.

Die Rotorwelle 1 hat vorzugsweise eine geringere, insbesondere eine mindestens zehnmal geringere, Sättigungsflussdichte als die Hülse 2.

Es ist zwischen der Hülse 2 und der Rotorwelle 1 ein Spaltbereich 7 ausgebildet, in welchem Klebstoff aufnehmbar ist und somit eine verbesserte Verbindung zwischen Rotorwelle 1 und Hülse 2 bewirkbar ist.

Insbesondere ist der Spaltbereich 7 rotationssymmetrisch zur Drehachse der Rotorwelle 1 ausgeführt, insbesondere also in Umfangsrichtung unterbrechungsfrei.

Es weist die Hülse 2 nach radial innen und/oder die Rotorwelle 1 nach radial außen zwei in axialer Richtung voneinander beabstandete, in Umfangsrichtung unterbrechungsfrei vollständig umlaufend ausgeführte Materialbereiche auf, so dass der vom Spaltbereich 7 überdeckte Radialabstandsbereich innerhalb des von den Materialbereichen überdeckten Radialabstandsbereich liegt.

Vorzugsweise ist die Hülse 2 an ihrer radialen Innenseite mittels Drehbearbeitung bearbeitet, insbesondere also gedreht bearbeitet und an ihrer radialen Außenseite mittels Schleifen bearbeitet.

Vorzugsweise ist die Hülse 2 samt ihrem nach radial außen hervorragenden Kragenbereich 5 rotationssymmetrisch zur Drehachse der Rotorwelle 1 ausgeführt, die ebenfalls rotationssymmetrische zur Drehachse ausgebildet ist.

Des Weiteren ist zwischen der Hülse 2 und der Rotorwelle 1 ein Ringspalt 6 ausgebildet, welcher einen axialen Bereich überdeckt, der angrenzt an den vom Kragenbereich 5 der Hülse 2 überdeckten axialen Bereich. Dieser Ringspalt 6 ist mit Klebstoff befüllt. Da dieser Ringspalt 6 sich vorzugsweise in radialer Richtung tiefer erstreckt als der Spaltbereich 7, ist das axiale Ende des dem Kragenbereich 5 zugewandten Endbereichs des Dauermagneten 3 weicher gelagert als in einem an den Ringspalt 6 angrenzenden Bereich. Somit sind Schwingungen unterdrückt, insbesondere, weil der Endbereich einem losen Ende ähnlich die Bildung von Schwingungsknoten unterdrückt.

Der vom Ringspalt 6 überdeckte Radialabstandsbereich umfasst den vom Spaltbereich 7 überdeckten Radialabstandsbereich.

Bei weiteren erfindungsgemäßen Ausführungsbeispielen wird die Hülse 2 an ihrer Innenseite nicht zylindrisch, sondern innenpolygonal ausgeformt. Ebenso ist die Rotorwelle 1 an ihrer Außenseite in dem von der Hülse 2 überdeckten axialen Bereich außenpolygonal ausgeformt, so dass die Hülse 2 auf diesen Bereich aufsteckbar und somit dann formschlüssig verbindbar ist. Vorzugsweise wird als Polygon ein Hypotrochoidenförmiges Polygon verwendet.

### Bezugszeichenliste

- 1: Rotorwelle
- 2: Hülse
- 3: Dauermagnet
- 4: Wellenbund
- 5: Kragenbereich
- 6: Ringspalt
- 7: Spaltbereich

## Patentansprüche

1. Elektromotor mit Rotor,
wobei der Rotor eine im und/oder zum Gehäuse des Elektromotors drehbar gelagerte Rotorwelle (1) aufweist,
**wobei** eine Hülse (2) auf die Rotorwelle aufgesteckt ist,
wobei Dauermagnete (3) mit der Hülse verbunden sind und auf die Hülse aufgeklebt sind,
wobei die Hülse radial zwischen den Dauermagneten und der Rotorwelle angeordnet ist,
wobei **die Hülse einen nach radial außen hervorragenden, in Umfangsrichtung vollständig umlaufenden Kragenbereich** (5) **aufweist, insbesondere zur axialen Begrenzung der Dauermagnete,**
**dadurch gekennzeichnet, dass zwischen Hülse und Rotorwelle ein Spaltbereich** (7) **ausgeformt ist als nach radial innen gerichtete Vertiefung an der Rotorwelle oder als nach radial außen gerichtete Vertiefung an der Innenseite der Hülse,**
**wobei der Spaltbereich zumindest teilweise mit Klebstoff befüllt ist,**
**wobei zwischen der Hülse und dem Dauermagneten ein in Umfangsrichtung vollständig umlaufender Ringspalt** (6) **ausgebildet ist, der mit Klebstoff befüllt ist.**

2. Elektromotor nach Anspruch 1,
**dadurch gekennzeichnet, dass**
Dauermagnete (3) gegen den Kragenbereich (5) angestellt sind.

3. Elektromotor nach einem der vorangegangenen Ansprüche,
**dadurch gekennzeichnet, dass**
die Hülse (2) an ihrer radial äußeren Oberfläche einen spanend bearbeiteten, insbesondere geschliffenen, Bereich aufweist, an dem die Dauermagnete (3) mit der Hülse verbunden sind.

4. Elektromotor nach einem der vorangegangenen Ansprüche,
**dadurch gekennzeichnet, dass**
die Hülse (2) an ihrer radial inneren Oberfläche einen spanend bearbeiteten, insbesondere drehend bearbeiteten, Bereich zur Verbindung mit der Rotorwelle (1) aufweist.

5. Elektromotor nach einem der vorangegangenen Ansprüche,
**dadurch gekennzeichnet, dass**
die Rotorwelle (1), insbesondere das Material der Rotorwelle, eine geringere, insbesondere eine mindestens zehnmal geringere, magnetische Permeabilität aufweist als die Hülse, insbesondere als das Material der Hülse (2).

6. Elektromotor nach einem der vorangegangenen Ansprüche,
**dadurch gekennzeichnet, dass**
die Rotorwelle (1), insbesondere das Material der Rotorwelle, eine geringere, insbesondere eine mindestens zehnmal geringere, spezifische magnetische Permeabilität, insbesondere bei einem Wechselmagnetfeld mit einer Frequenz von weniger als 100 Hertz, aufweist als die Hülse (2), insbesondere als das Material der Hülse.

7. Elektromotor nach einem der vorangegangenen Ansprüche,
**dadurch gekennzeichnet, dass**
die Rotorwelle (1), insbesondere das Material der Rotorwelle, eine geringere, insbesondere eine mindestens zehnmal geringere, Sättigungsflussdichte aufweist als die Hülse (2), insbesondere als das Material der Hülse.

8. Elektromotor nach einem der vorangegangenen Ansprüche,
**dadurch gekennzeichnet, dass**
die Rotorwelle (1), insbesondere das Material der Rotorwelle, eine geringere, insbesondere eine mindestens zehnmal geringere, Suszeptibilität aufweist als die Hülse (2), insbesondere als das Material der Hülse.

9. Elektromotor nach einem der vorangegangenen Ansprüche,
**dadurch gekennzeichnet, dass**
die Luftstrecke zwischen einem Dauermagneten (3) und der Hülse (2) kürzer, insbesondere mindestens zehnmal kürzer, ist als die Luftstrecke zwischen dem Dauermagneten und der Rotorwelle (1).

10. Elektromotor nach einem der vorangegangenen Ansprüche,
**dadurch gekennzeichnet, dass**
die Hülse (2) mit der Rotorwelle (1) formschlüssig verbunden ist,
wobei die Hülse an ihrer radialen Innenseite innenpolygonal ausgeformt ist,
wobei die Rotorwelle an ihrer radialen Außenseite außenpolygonal ausgeformt ist.

11. Elektromotor nach Anspruch 10,
**dadurch gekennzeichnet, dass**
als polygonale Form ein Hypotrochoidenförmiges Polygon verwendet ist.

12. Elektromotor nach einem der vorangegangenen Ansprüche,
**dadurch gekennzeichnet, dass**
die Rotorwelle (1) aus einem Einsatzstahl gefertigt ist, insbesondere einstückig, insbesondere einteilig.

13. Elektromotor nach einem der vorangegangenen Ansprüche,
**dadurch gekennzeichnet, dass**
die Hülse (2) aus einem Vergütungsstahl gefertigt ist, insbesondere einstückig, insbesondere einteilig.

14. Elektromotor nach einem der vorangegangenen Ansprüche,
**dadurch gekennzeichnet, dass**
**der vom Ringspalt** (6) **überdeckte Radialabstandsbereich den vom Spaltbereich überdeckten Radialabstandsbereich umfasst.**

15. Elektromotor nach einem der vorangegangenen Ansprüche,
**dadurch gekennzeichnet, dass**
die Hülse (2) zumindest eine radial gerichtete Gewindebohrung aufweist, in welche Schraubteil, insbesondere Madenschraube, eingeschraubt ist,
wobei das Schraubteil auf die Rotorwelle (1) drückt, insbesondere in einer an der Oberfläche der Rotorwelle ausgeführten Vertiefung,
insbesondere wobei das Schraubteil in den Spaltbereich ragt, insbesondere derart, dass Klebstoff die Rotorwelle, die Hülse und das Schraubteil mit Klebstoff stoffschlüssig verbunden sind.

## Claims

1. An electric motor with rotor,
wherein the rotor has a rotor shaft (1) mounted rotatably in and/or in relation to the housing of the electric motor,
wherein a sleeve (2) is mounted on the rotor shaft,
wherein permanent magnets (3) are connected to the sleeve and are glued onto the sleeve,
wherein the sleeve is arranged radially between the permanent magnets and the rotor shaft,
wherein the sleeve has a shoulder region (5) which projects radially outwards and is completely encircling in the peripheral direction, in particular for axially limiting the permanent magnets,
**characterised in that**
between the sleeve and rotor shaft there is formed a gap region (7) as a radially inwards-directed depression on the rotor shaft or as a radially outwards-directed depression on the inner side of the sleeve,
the gap region being at least partially filled with adhesive,
there being formed between the sleeve and the permanent magnet an annular gap (6) which is completely encircling in the peripheral direction, which annular gap is filled with adhesive.

2. An electric motor according to claim 1,
**characterised in that**
permanent magnets (3) are positioned against the shoulder region (5).

3. An electric motor according to one of the preceding claims,
**characterised in that**
the sleeve (2) has on its radially outer surface a region which is machined by metal-cutting, in particular ground, at which the permanent magnets (3) are connected to the sleeve.

4. An electric motor according to one of the preceding claims,
**characterised in that**
the sleeve (2) has on its radially inner surface a region which is machined by metal-cutting, in particular machined by turning, for connection to the rotor shaft (1).

5. An electric motor according to one of the preceding claims,
**characterised in that**
the rotor shaft (1), in particular the material of the rotor shaft, has a lower, in particular an at least ten times lower, magnetic permeability than the sleeve, in particular than the material of the sleeve (2).

6. An electric motor according to one of the preceding claims,
**characterised in that**
the rotor shaft (1), in particular the material of the rotor shaft, has a lower, in particular an at least ten times lower, specific magnetic permeability, in particular for an alternating magnetic field with a frequency of less than 100 Hertz, than the sleeve (2), in particular than the material of the sleeve.

7. An electric motor according to one of the preceding claims,
**characterised in that**
the rotor shaft (1), in particular the material of the rotor shaft, has a lower, in particular an at least ten times lower, saturation flux density than the sleeve (2), in particular than the material of the sleeve.

8. An electric motor according to one of the preceding claims,
**characterised in that**
the rotor shaft (1), in particular the material of the rotor shaft, has a lower, in particular an at least ten times lower, susceptibility than the sleeve (2), in particular than the material of the sleeve.

9. An electric motor according to one of the preceding claims,
**characterised in that**
the air gap between a permanent magnet (3) and the sleeve (2) is shorter, in particular at least ten times shorter, than the air gap between the permanent magnet and the rotor shaft (1).

10. An electric motor according to one of the preceding claims,
**characterised in that**
the sleeve (2) is connected to the rotor shaft (1) in a form-fit,
with the sleeve being formed as an internal polygon on its radial inner side,
with the rotor shaft being formed as an external polygon on its radial outer side.

11. An electric motor according to claim 10,
**characterised in that**
a hypotrochoid-shaped polygon is used as the polygonal shape.

12. An electric motor according to one of the preceding claims,
**characterised in that**
the rotor shaft (1) is manufactured, in particular in one piece, in particular in one part, from a case-hardened steel.

13. An electric motor according to one of the preceding claims,
**characterised in that**
the sleeve (2) is manufactured, in particular in one piece, in particular in one part, from a quenched and tempered steel.

14. An electric motor according to one of the preceding claims,
**characterised in that**
the radial clearance region covered by the annular gap (6) encompasses the radial clearance region covered by the gap region.

15. An electric motor according to one of the preceding claims,
**characterised in that**
the sleeve (2) has at least one radially directed threaded bore, into which [a] screwing part, in particular grub screw, is screwed,
with the screwing part pressing on the rotor shaft (1), in particular in a depression formed on the surface of the rotor shaft,
in particular with the screwing part projecting into the gap region, in particular such that adhesive the rotor shaft, the sleeve and the screwing part are connected by a material-formed bond using adhesive.

## Revendications

1. Moteur électrique avec rotor,
le rotor présentant un arbre de rotor (1) monté rotatif dans et/ou par rapport au carter du moteur électrique,
une douille (2) étant enfichée sur l'arbre de rotor,
des aimants permanents (3) étant reliés à la douille et étant collés sur la douille,
la douille étant agencée radialement entre les aimants permanents et l'arbre de rotor, la douille présentant une région de col (5) faisant saillie radialement vers l'extérieur et s'étendant sur la totalité de la circonférence, en particulier en vue d'une limitation axiale des aimants permanents,
**caractérisé en ce que**
une région de fente (7) est formée entre la douille et l'arbre de rotor sous la forme d'une cavité dirigée radialement vers l'intérieur au niveau de l'arbre de rotor ou sous la forme d'une cavité dirigée radialement vers l'extérieur au niveau de la face intérieure de la douille,
la région de fente étant au moins partiellement remplie de colle,
une fente annulaire (6), s'étendant sur la totalité de la circonférence et remplie de colle, étant formée entre la douille et l'aimant permanent.

2. Moteur électrique selon la revendication 1,
**caractérisé en ce que**
des aimants permanents (3) sont placés contre la région de col (5).

3. Moteur électrique selon l'une quelconque des revendications précédentes,
**caractérisé en ce que**
la douille (2) présente, au niveau de sa surface radialement extérieure, une région usinée par enlèvement, en particulier rectifiée, au niveau de laquelle les aimants permanents (3) sont reliés à la douille.

4. Moteur électrique selon l'une quelconque des revendications précédentes,
**caractérisé en ce que**
la douille (2) présente, au niveau de sa surface radialement intérieure, une région usinée par enlèvement, en particulier usinée au tour, en vue d'une liaison avec l'arbre de rotor (1).

5. Moteur électrique selon l'une quelconque des revendications précédentes,
**caractérisé en ce que**
l'arbre de rotor (1), en particulier le matériau de l'arbre de rotor, présente une perméabilité magnétique inférieure, en particulier au moins dix fois inférieure, à celle de la douille, en particulier à celle du matériau de la douille (2).

6. Moteur électrique selon l'une quelconque des revendications précédentes,
**caractérisé en ce que**
l'arbre de rotor (1), en particulier le matériau de l'arbre de rotor, présente une perméabilité magnétique spécifique inférieure, en particulier au moins dix fois inférieure, en particulier dans le cas d'un champ magnétique alternatif d'une fréquence inférieure à 100 Hertz, à celle de la douille (2), en particulier à celle du matériau de la douille.

7. Moteur électrique selon l'une quelconque des revendications précédentes,
**caractérisé en ce que**
l'arbre de rotor (1), en particulier le matériau de l'arbre de rotor, présente une densité de flux de saturation magnétique inférieure, en particulier au moins dix fois inférieure, à celle de la douille, en particulier à celle du matériau de la douille (2).

8. Moteur électrique selon l'une quelconque des revendications précédentes,
**caractérisé en ce que**
l'arbre de rotor (1), en particulier le matériau de l'arbre de rotor, présente une susceptibilité magnétique inférieure, en particulier au moins dix fois inférieure, à celle de la douille, en particulier à celle du matériau de la douille (2).

9. Moteur électrique selon l'une quelconque des revendications précédentes,
**caractérisé en ce que**
l'intervalle d'air entre un aimant permanent (3) et la douille (2) est plus court, en particulier au moins dix fois plus court, que l'intervalle d'air entre l'aimant permanent et l'arbre de rotor (1).

10. Moteur électrique selon l'une quelconque des revendications précédentes,
**caractérisé en ce que**
la douille (2) est reliée avec verrouillage par complémentarité de forme à l'arbre de rotor (1),
la douille étant de forme intérieure polygonale au niveau de sa face intérieure radiale, l'arbre de rotor étant de forme extérieure polygonale au niveau de sa face extérieure radiale.

11. Moteur électrique selon la revendication 10,
**caractérisé en ce que**
un polygone hypotrochoïdal est utilisé comme forme polygonale.

12. Moteur électrique selon l'une quelconque des revendications précédentes,
**caractérisé en ce que**
l'arbre de rotor (1) est fabriqué, en particulier d'un seul tenant, en particulier d'une seule pièce, à partir d'un acier de cémentation.

13. Moteur électrique selon l'une quelconque des revendications précédentes,
**caractérisé en ce que**
la douille (2) est fabriquée, en particulier d'un seul tenant, en particulier d'une seule pièce, à partir d'un acier trempé et revenu.

14. Moteur électrique selon l'une quelconque des revendications précédentes,
**caractérisé en ce que**
la région d'espacement radial recouverte par la fente annulaire (6) comprend la région d'espacement radial recouverte par la région de fente.

15. Moteur électrique selon l'une quelconque des revendications précédentes,
**caractérisé en ce que**
la douille (2) présente au moins un alésage fileté orienté radialement et au sein duquel est vissée la partie vis, en particulier la vis sans tête,
la partie vis appuyant sur l'arbre de rotor (1), en particulier dans une cavité réalisée au niveau de la surface de l'arbre de rotor, la partie vis faisant en particulier saillie dans la région de fente, en particulier de telle manière que l'arbre de rotor, la douille et la partie vis sont reliés avec verrouillage par complémentarité de matière par de la colle.
